(19) Europäisches Patentamt
European Patent Office
Office européen des brevets

(11) **EP 2 047 226 B1**

(12) **EUROPÄISCHE PATENTSCHRIFT**

(45) Veröffentlichungstag und Bekanntmachung des Hinweises auf die Patenterteilung:
**19.12.2018 Patentblatt 2018/51**

(21) Anmeldenummer: **07765757.5**

(22) Anmeldetag: **02.07.2007**

(51) Int Cl.:
***G01M 3/20*** *(2006.01)*

(86) Internationale Anmeldenummer:
**PCT/EP2007/056639**

(87) Internationale Veröffentlichungsnummer:
**WO 2008/012174 (31.01.2008 Gazette 2008/05)**

(54) **LECKSUCHGERÄT**

LEAKAGE SEEKER

APPAREIL DE DÉTECTION DE FUITES

(84) Benannte Vertragsstaaten:
**DE FR IT**

(30) Priorität: **27.07.2006 DE 102006034735**

(43) Veröffentlichungstag der Anmeldung:
**15.04.2009 Patentblatt 2009/16**

(73) Patentinhaber: **Inficon GmbH**
**50968 Köln (DE)**

(72) Erfinder:
• **GERDAU, Ludolf**
**50189 Elsdorf (DE)**
• **ROLFF, Randolf, Paul**
**50169 Horrem (DE)**

• **ROLFF, Norbert**
**50169 Horrem (DE)**
• **WETZIG, Daniel**
**50999 Köln (DE)**

(74) Vertreter: **dompatent von Kreisler Selting Werner -**
**Partnerschaft von Patent- und Rechtsanwälten**
**mbB**
**Deichmannhaus am Dom**
**Bahnhofsvorplatz 1**
**50667 Köln (DE)**

(56) Entgegenhaltungen:
**DE-A1- 19 859 186    US-A- 6 014 892**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Lecksuchgerät mit einer Vorvakuum-Förderpumpe, einem Gasdetektor und einem Flusssensor.

Mit Lecksuchgeräten, auch Schnüffellecksuchgeräte genannt, wird ein ein Testgas enthaltener Prüfling abgetastet. Wenn ein Gasleck vorhanden ist, dringt das Testgas aus dem Prüfling nach außen. Das Testgas wird durch den Gasdetektor bzw. Gassensor festgestellt und gemeldet. Die Vorvakuum-Förderpumpe hat die Aufgabe, kontinuierlich Gas aus der Nähe des Prüflings zu fördern und dem Gasdetektor zuzuführen.

In dem Gasweg ist vor oder hinter der Förderpumpe ein Flusssensor vorgesehen, der den Gasfluss bestimmt. Mit Hilfe des Flusssensors wird zum einen eine Kontroll- und Überwachungsfunktion ausgeübt, nämlich kontrolliert, ob der Förderweg möglicherweise verstopft ist bzw. ob die Förderpumpe störungsfrei arbeitet. Ferner kann zum anderen durch den Flusssensor die Flussrate und bei Vorliegen von Testgas die Testgas-Konzentration im geförderten Gas bzw. die Leckrate bestimmt werden.

US 6,014,892 A beschreibt einen massenspektrometrischen Lecksucher mit einem Flusssensor. Eine Ventilanordnung zur Versorgung eines hydraulischen Verbrauchers mit einem Pulsationsdämpfer ist in DE19859186 offenbart.

Die Praxis hat gezeigt, dass der Flusssensor ein relativ empfindliches Bauteil ist, das häufig beschädigt wird.

Aufgabe der Erfindung ist es demgegenüber, ein Lecksuchgerät zu schaffen, dessen Flusssensor besser gegen Beschädigungen geschützt ist.

Diese Aufgabe wird erfindungsgemäß gelöst mit den Merkmalen des Patentanspruches 1.

Bei dem erfindungsgemäßen Lecksuchgerät sind zwischen der Förderpumpe und dem Flusssensor ein Gas-Puffervolumen und eine Gas-Drossel angeordnet. Durch die Anordnung eines Puffervolumens und einer Drossel zwischen der Förderpumpe und dem Flusssensor werden Druckstöße der Förderpumpe auf dem Weg zu dem Flusssensor gedämpft und geglättet. Druckstöße der Förderpumpe entstehen beim Ein- und Ausschalten der Förderpumpe, entstehen jedoch insbesondere auch durch die Förderpumpe während der Förderung, insbesondere bei Verdränger-Förderpumpen, die diskontinuierlich Gas fördern.

Der Flusssensor wird durch die einen Tiefpass bildende Anordnung aus Puffervolumen und Drossel bezüglich schneller Druckstöße von der Förderpumpe isoliert. Hierdurch wird der Flusssensor vor der Hauptursache für Beschädigungen des Flusssensors auf einfache und preiswerte Weise geschützt.

Vorzugsweise ist das Puffervolumen im Verhältnis zu der Drossel pumpenseitig angeordnet. Mit anderen Worten, das Puffervolumen ist stets zwischen der Drossel und der Förderpumpe angeordnet, unabhängig davon, ob die Anordnung aus Puffervolumen, Drossel und Flusssensor in Flussrichtung vor der Förderpumpe oder nach der Förderpumpe angeordnet ist. Nur bei dieser Anordnung können das Puffervolumen und die Drossel in Bezug auf die Förderpumpe als Tiefpass wirken.

Vorzugsweise ist der Flusssensor auslassseitig der Förderpumpe angeordnet. Auf diese Weise können auch Druckstöße, die in den Lecksucher von außen durch eine Schnüffelöffnung eingeleitet werden, von dem Flusssensor ferngehalten werden, da zwischen dem Flusssensor und der Schnüffelöffnung die Förderpumpe sowie das Puffervolumen und die Drossel angeordnet sind.

Vorzugsweise beträgt das Volumen des Puffervolumens mindestens das Dreifache des Schöpfvolumens der Förderpumpe. Hierbei wird von einer diskontinuierlich fördernden Förderpumpe ausgegangen, die im Betrieb entsprechende Druckstöße generiert. In einer bevorzugten Ausführungsform ist die Förderpumpe als Verdrängerpumpe ausgebildet, die ausschließlich diskontinuierlich fördert. Verdrängerpumpen, beispielsweise Membranpumpen, sind einfach im Aufbau, robust und preiswert, und werden daher bevorzugt in Lecksuchgeräten als Förderpumpen eingesetzt.

Durch die Auslegung des Puffervolumens als mindestens das Dreifache des Schöpfvolumens der Förderpumpe wird sichergestellt, dass die von der Förderpumpe generierten Druckstöße weitgehend gedämpft werden, so dass der Flusssensor ausreichend geschützt ist vor von der Förderpumpe im Betrieb generierten Druckstößen.

Vorzugsweise ist der Druckabfall an der Drossel kleiner als 100 mbar, besonders bevorzugt kleiner als 70 mbar. Auf diese Weise werden die von der Förderpumpe mit Hubfrequenz generierten Druckstöße zuverlässig durch die Anordnung aus Puffervolumen und Drossel gefiltert. Die Hubfrequenz der Förderpumpe ist die Frequenz, mit der bei einer als Verdrängerpumpe ausgebildeten Förderpumpe das Schöpfvolumen zeitbezogen gefördert wird. Die Hubfrequenz ist identisch mit der Drehfrequenz der Förderpumpe, wenn pro Umdrehung der Antriebswelle ein einziges Schöpfvolumen gefördert wird oder mehrere seriell verbundene Schöpfvolumina gefördert werden. Weist die Förderpumpe jedoch mehrere parallele verbundene Schöpfvolumina auf, ist die Hubfrequenz ein entsprechendes Vielfaches der Drehfrequenz der Antriebswelle.

Gemäß einer bevorzugten Ausgestaltung ist mindestens eine weitere Anordnung aus einem Puffervolumen und einer Drossel vorgesehen. Diese Puffervolumen-Drossel-Anordnung kann unmittelbar benachbart zu der ersten Puffervolumen-Drossel-Anordnung angeordnet sein, kann jedoch auch getrennt von der ersten Anordnung vorgesehen sein. Durch Vorsehen einer zweiten Puffervolumen-Drossel-Anordnung können die Filter-Parameter der Gesamtanordnung aus den beiden Puffervolumen-Drossel-Anordnungen noch besser an die Anforderungen angepasst werden. Bei einer Anordnung des Flusssensors zwischen der schnüffelöffnung und der Förderpumpe kann die zweite Puffervolumen-Drossel-Anordnung zwischen der Schnüffelöffnung und dem Flusssensor angeordnet sein, während die erste Puffervolumen-Drossel-Anordnung zwischen der Förderpumpe und dem Flusssensor angeordnet ist. Auf diese Weise wird bei dieser Anordnung des Flusssensors dieser zu beiden Seiten gegen Druckstöße geschützt.

Vorzugsweise ist der Flusssensor ein mikromechanischer Flusssensor. Ferner kann der Flusssensor ein thermischer Flusssensor sein. Mikromechanische Flusssensoren sind relativ preiswert und genau, insbesondere wenn sie als thermische Flusssensoren ausgebildet sind. Allerdings sind mikromechanische thermische Flusssensoren sehr empfindlich gegenüber Druckstößen. Durch den Einsatz der Puffervolumen-Drossel-Anordnung wird es möglich, mikromechanische thermische Flusssensoren einzusetzen, ohne die Zuverlässigkeit des Lecksuchers wegen der Empfindlichkeit des mikromechanischen thermischen Flusssensors zu verschlechtern.

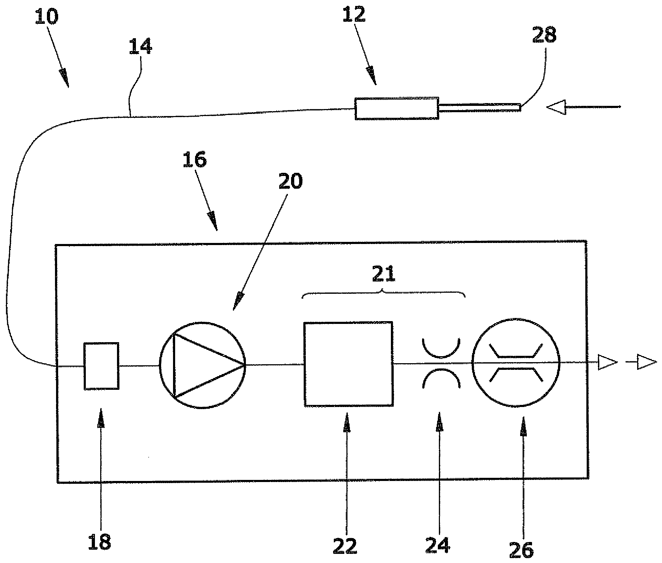

Im Folgenden wird ein Ausführungsbeispiel der Erfindung anhand der Zeichnung näher erläutert.

Die Figur zeigt schematisch ein Lecksuchgerät.

In der Figur ist ein Lecksuchgerät 10 dargestellt, das im wesentlichen aus einem Handstück 12, einer Schnüffelleitung 14, und einer Detektionseinheit 16 besteht. Die Detektionseinheit 16 weist hintereinander angeordnet einen Gasdetektor 18, eine Förderpumpe 20, ein Puffervolumen 22, eine Drossel 24 sowie einen Flusssensor 26 auf.

Das Handstück 12 wird auch als Schnüffelsonde bezeichnet und weist an seinem distalen Ende eine Schnüffelöffnung 28 auf, durch die das Gas angesaugt wird. Das angesaugte Gas fließt durch die als flexibler Schlauch ausgebildete Schnüffelleitung 14 zu dem Gasdetektor 18, der ggf. ein Testgas, beispielsweise Helium, in dem angesaugten Gas detektiert. Der Gasdetektor 18 kann beispielsweise als Massenspektrometer ausgebildet sein.

Die Förderpumpe 20 ist eine Vorvakuumpumpe, die als Verdrängerpumpe, beispielsweise als Membranpumpe, ausgebildet ist. Verdrängerpumpen erzeugen naturgemäß Druckstöße beim Öffnen und Schließen des Schöpfraumes. Die Förderpumpe 20 erzeugt einen Volumenstrom von ungefähr 150 $\frac{cm^3}{s}$. An die Förderpumpe 20 schließt sich das Puffervolumen 22 an, dessen Volumen mindestens das Dreifache des Schöpfvolumens der Förderpumpe 20 beträgt. Beispielsweise beträgt das Schöpfvolumen der Förderpumpe 20 10 cm³. Das Volumen des Puffervolumens 22 beträgt dann beispielsweise 50 cm³. An das Puffervolumen schließt sich die Drossel 24 an, an der ein Druckabfall von weniger als 100 mbar, vorzugsweise von weniger als 70 mbar, erfolgt.

An die Drossel 24 schließt sich schließlich der Flusssensor 26 an, der als mikromechanischer thermischer Flusssensor ausgebildet ist. Derartige Flusssensoren sind empfindlich gegenüber Druckstößen, die beispielsweise beim Ein- und Ausschalten der Förderpumpe 20, jedoch auch bei jedem Öffnen und Schließen des Schöpfvolumens der Förderpumpe 20 generiert werden.

Der Flusssensor 26 dient der Funktionskontrolle der Förderpumpe, dient der Feststellung von Verstopfungen des gesamten Gas-Förderweges und dient der Quantifizierung des Gasstromes, woraus wiederum bei Feststellung der Anwesenheit von Testgas die Testgas-Konzentration bzw. die Leckrate ermittelt werden kann.

Die Grenzfrequenz der Anordnung 21 aus Puffervolumen 22 und Drossel 24 ist kleiner als die Hälfte der Hubfrequenz der Förderpumpe 20. Auf diese Weise wird eine ausreichende Dämpfung der Förderpumpe in Bezug auf ihre Hubfrequenz sichergestellt.

Nach dem Flusssensor verlässt das Gas die Detektionseinheit 16 durch einen Auspuff.

Der Flusssensor 26 ist vorliegend auslassseitig der Förderpumpe 20 angeordnet. Grundsätzlich kann der Flusssensor 26 jedoch auch einlassseitig der Förderpumpe 20 angeordnet sein. Um im letzteren Fall die Übertragung von durch die Förderpumpe 20 generierten Druckstößen auf den Flusssensor zu vermeiden, muss eine entsprechende Anordnung aus Puffervolumen und Drossel zwischen der Förderpumpe und dem Flusssensor angeordnet sein, wobei das Puffervolumen in Bezug auf die Drossel stets förderpumpenseitig angeordnet ist.

## Patentansprüche

1. Lecksuchgerät (10) mit einer Vorvakuum-Förderpumpe (20), einem Gasdetektor (18) und einem Flusssensor (26),
   **dadurch gekennzeichnet,**
   **dass** der Flusssensor (26) durch einen zwischen der Förderpumpe (20) und dem Flusssensor (26) angeordneten Tiefpass aus einem Puffervolumen (22) und einer Drossel (24) in Reihenschaltung von der Förderpumpe isoliert ist.

2. Lecksuchgerät (10) nach Anspruch 1, **dadurch gekennzeichnet, dass** das Puffervolumen (22) im Verhältnis zu der Drossel (24) pumpenseitig angeordnet ist.

3. Lecksuchgerät (10) nach Anspruch 1 oder 2, **dadurch gekennzeichnet, dass** der Flusssensor (26) auslassseitig der Förderpumpe (20) angeordnet ist.

4. Lecksuchgerät (10) nach einem der Ansprüche 1 - 3, **dadurch gekennzeichnet, dass** das Volumen des Puffervolumens (22) mindestens das Dreifache des Schöpfvolumens der Förderpumpe (20) ist.

5. Lecksuchgerät (10) nach einem der Ansprüche 1 - 4, **dadurch gekennzeichnet, dass** die Grenzfrequenz der Anordnung (21) aus dem Puffervolumen (22) und der Drossel (24) kleiner als die Hälfte der Hubfrequenz der Förderpumpe (20) ist.

6. Lecksuchgerät (10) nach einem der Ansprüche 1 - 5, **dadurch gekennzeichnet, dass** der Druckabfall an der Drossel (24) kleiner als 100 mbar ist.

7. Lecksuchgerät (10) nach einem der Ansprüche 1 - 6, **dadurch gekennzeichnet, dass** das Lecksuchgerät mindestens eine weitere Anordnung aus Puffervolumen und Drossel aufweist.

8. Lecksuchgerät (10) nach einem der Ansprüche 1 - 7, **dadurch gekennzeichnet, dass** die Förderpumpe (20) eine Verdrängerpumpe ist.

9. Lecksuchgerät (10) nach einem der Ansprüche 1 - 8, **dadurch gekennzeichnet, dass** der Flusssensor (26) ein mikromechanischer Flusssensor ist.

10. Lecksuchgerät (10) nach einem der Ansprüche 1 - 9, **dadurch gekennzeichnet, dass** der Flusssensor (26) ein thermischer Flusssensor ist.

**Claims**

1. A leak detector (10) comprising a pre-vacuum feed pump (20), a gas detector (18) and a flow sensor (26),
   **characterized in**
   the flow sensor (26) is isolated from the feed pump by a low pass arranged between the feed pump (20) and the flow sensor (26) and comprising a buffer volume (22) and a restrictor (24) connected in series.

2. The leak detector (10) according to claim 1, **characterized in that** the buffer volume (22), when seen relative to the restrictor (24), is arranged on the pump side.

3. The leak detector (10) according to claim 1 or 2, **characterized in that** the flow sensor (26) is arranged on the outlet side of the feed pump (20).

4. The leak detector (10) according to any one of claims 1-3, **characterized in that** the volume of the buffer volume (22) is at least three times as large as the pumping volume of the feed pump (20).

5. The leak detector (10) according to any one of claims 1-4, **characterized in that** the limiting frequency of the arrangement (21) of buffer volume (22) and restrictor (24) is smaller than half the stroke frequency of the feed pump (20).

6. The leak detector (10) according to any one of claims 1-5, **characterized in that** the pressure drop at the restrictor (24) is less than 100 mbar.

7. The leak detector (10) according to any one of claims 1-6, **characterized in that** the leak detector comprises at least one further arrangement of buffer volume and restrictor.

8. The leak detector (10) according to any one of claims 1-7, **characterized in that** the feed pump (20) is a displacement pump.

9. The leak detector (10) according to any one of claims 1-8, **characterized in that** the flow sensor (26) is a micromechanical flow sensor.

10. The leak detector (10) according to any one of claims 1-9, **characterized in that** the flow sensor (26) is a thermal flow sensor.

**Revendications**

1. Appareil de détection des fuites (10) doté d'une pompe de transfert à vide préliminaire (20), d'un détecteur de gaz (18) et d'un capteur de débit (26), **caractérisé en ce que** le capteur de débit (26) est isolé de la pompe de transfert par le biais d'un passe-bas agencé entre la pompe de transfert (20) et le capteur de débit (26), fait d'un volume-tampon (22) et d'un étranglement (24) connectés en série.

2. Appareil de détection des fuites (10) selon la revendication 1, **caractérisé en ce que** le volume-tampon (22) est agencé du côté de la pompe par rapport à l'étranglement (24).

3. Appareil de détection des fuites (10) selon la revendication 1 ou 2, **caractérisé en ce que** le capteur de débit (26) est agencé du côté de la sortie de la pompe de transfert (20).

4. Appareil de détection des fuites (10) selon l'une des revendications 1-3, **caractérisé en ce que** le volume du volume-tampon (22) est au moins le triple du volume d'aspiration de la pompe de transfert (20).

5. Appareil de détection des fuites (10) selon l'une des revendications 1-4, **caractérisé en ce que** la fréquence de coupure de l'agencement (21) constitué du volume-tampon (22) et de l'étranglement (24) est inférieure à la moitié de la fréquence de course de la pompe de transfert (20).

6. Appareil de détection des fuites (10) selon l'une des revendications 1-5, **caractérisé en ce que** la chute de pression à l'étranglement (24) est inférieure à 100 mbar.

7.  Appareil de détection des fuites (10) selon l'une des revendications 1-6, **caractérisé en ce que** l'appareil de détection des fuites comporte au moins un arrangement de volume-tampon et d'étranglement.

8.  Appareil de détection des fuites (10) selon l'une des revendications 1-7, **caractérisé en ce que** la pompe de transfert (20) est une pompe volumétrique.

9.  Appareil de détection des fuites (10) selon l'une des revendications 1-8, **caractérisé en ce que** le capteur de débit (26) est un capteur de débit micromécanique.

10.  Appareil de détection des fuites (10) selon l'une des revendications 1-9, **caractérisé en ce que** le capteur de débit (26) est un capteur de débit thermique.

7.  Appareil de détection des fuites (10) selon l'une des revendications 1-6, **caractérisé en ce que** l'appareil de détection des fuites comporte au moins un arrangement de volume-tampon et d'étranglement.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6014892 A
- DE 19859186